Europäisches Patentamt

European Patent Office

Office européen des brevets

(19)

(11) EP 0 938 216 A2

## (12) EUROPÄISCHE PATENTANMELDUNG

(43) Veröffentlichungstag:
25.08.1999 Patentblatt 1999/34

(51) Int. Cl.⁶: $H04L\ 27/22$, $H04L\ 27/38$

(21) Anmeldenummer: 99102423.3

(22) Anmeldetag: 09.02.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 24.02.1998 DE 19807703

(71) Anmelder: ROBERT BOSCH GMBH
70442 Stuttgart (DE)

(72) Erfinder:
• Spreitz, Gerald
  30165 Hannover (DE)
• Gieske, Kurt
  31137 Hildesheim (DE)
• Bolle, Michael
  30880 Laatzen (DE)

### (54) Einrichtung zum Empfang von QAM-Signalen und DPSK-Signalen

(57) Bei einer Einrichtung zur Demodulation von QAM-Signalen, welche digital codierte Informationen darstellen, werden nach einer Ableitung der Quadraturkomponenten der zu demodulierenden QAM-Signale ein Betragssignal und ein Phasensignal gebildet. Das Betragssignal und das Phasensignal werden gemeinsam demoduliert.

Fig.1

**Beschreibung**

Die Erfindung betrifft eine Einrichtung zur Demodulation von QAM-Signalen und DPSK-Signalen, welche digital codierte Informationen darstellen.

Bei digitalen Übertragungsverfahren werden Bitströme mit Hilfe von komplexwertigen Trägern übertragen, welche die Informationen in ihrer Phase und/oder in ihrer Amplitude enthalten. Bei inkoheränten Systemen ist eine differentielle Codierung der Information erforderlich, d. h., die Information wird als Differenz der aktuellen Information zu einer vorangegangenen Information codiert.

Bei bekannten Verfahren zur Demodulation von QAM-Signalen werden die Informationen aus den Quadraturkomponenten gewonnen, die aus einem Realteil (Inphase I) und einem Imaginärteil (Quadratur Phase Q) bestehen.

Aufgabe der vorliegenden Erfindung ist es daher, eine Einrichtung zur Demodulation von QAM-Signalen oder DPSK-Signalen anzugeben, bei welcher der Realisierungsaufwand gegenüber den bekannten Einrichtungen wesentlich vermindert ist. Dies trifft sowohl für eine Realisierung der Einrichtung mit Hilfe von dedizierter Hardware als auch für eine Realisierung mittels programmierbarer Prozessoren zu.

Diese Aufgabe wird bei einer erfindungsgemäßen Einrichtung zur Demodulation von QAM-Signalen dadurch gelöst, daß nach einer Ableitung der Quadraturkomponenten der zu demodulierenden QAM-Signale ein Betragssignal und ein Phasensignal gebildet werden und daß das Betragssignal und das Phasensignal gemeinsam demoduliert werden.

Bei der erfindungsgemäßen Einrichtung zur Demodulation von DPSK-Signalen ist vorgesehen, daß nach einer Ableitung der Quadraturkomponenten der zu demodulierenden DPSK-Signale mindestens ein Phasensignal gebildet wird und daß das jeweils gebildete Phasensignal und ein vorangegangenes Phasensignal subtrahiert werden.

Bei den erfindungsgemäßen Einrichtungen ist die Reduzierung des Realisierungsaufwandes sowohl bezüglich der Anzahl der arithmetrischen Einheiten als auch bezüglich der Anzahl der benötigten Speicherelemente gegeben.

Je nachdem in welcher Form die zu demodulierenden Signale vorliegen, ist eine Ableitung der für die erfindungsgemäße Einrichtung erforderlichen Quadraturkomponenten in an sich bekannter Weise möglich. So kann beispielsweise bei einem trägerfrequent empfangenen QAM- oder DPSK-Signal eine Umsetzung in das Basisband oder in eine Zwischenfrequenzlage erfolgen. Dieses zunächst noch analoge Signal kann dann in ein digitales Signal umgewandelt werden. Für den Fall, daß das Signal dabei in einer Zwischenfrequenzlage abgetastet wird, wird eine digitale I/Q-Modulation durchgeführt, die die digitalen Quadraturkomponenten (I/Q) erzeugt. Diese beiden Signale werden auch als komplexes Basisband bezeichnet. Im Falle einer analogen Umsetzung in das Basisband werden die digitalen Signale im komplexen Basisband durch Analog/Digital-Wandlung der analogen Signale generiert. Entweder durch Abgriff der Quadraturkomponenten zu bestimmten Zeitpunkten oder durch eine FFT (Fast Fourier Transformation) bei Anwendung des OFDM-Verfahrens (Orthogonal Frequency Division Multiplex), werden die Quadraturkomponenten der erfindungsgemäßen Einrichtung zugeführt.

Die Reduzierung des Rechenaufwandes mit Hilfe der erfindungsgemäßen Einrichtung wird im folgenden anhand eines DQAM-Signals (Differential QAM) erläutert. Dabei wird bei der herkömmlichen Demodulation das Differenzsymbol δS, also letztlich das demodulierte Signal, durch Rechnung nach folgender Gleichung gewonnen:

$$\delta S = (I_k + jQ_k) \cdot (I_{k-1} - jQ_{k-1})$$
$$= (I_k \cdot I_{k-1} - Q_{k-1} \cdot Q_k) + j(I_{k-1} \cdot Q_k + I_k \cdot Q_{k-1})$$

Bei der erfindungsgemäßen Einrichtung reduziert sich jedoch der Rechenaufwand zu:

$$\delta S = A_k \cdot A_{k-1} \cdot \exp(P_k - P_{k-1}),$$

wobei A das Betragssignal und P das Phasensignal ist. Zur Bildung des Differenzsymbols sind letztlich lediglich eine Multiplikation und eine Addition erforderlich.

Ein weiterer Vorteil der erfindungsgemäßen Einrichtung besteht darin, daß eine Korrektur einer Störphase, die durch einen Frequenzverschub zwischen Empfänger- und Senderfrequenz entsteht, in einfacher Weise mit Hilfe einer Addition erfolgen kann. Dieser Vorteil ist insbesondere bei der Demodulation von DPSK-Signalen wichtig.

Vorzugsweise ist bei der erfindungsgemäßen Einrichtung vorgesehen, daß die Bildung des Betragssignals und des Phasensignals nach dem Cordic-Verfahren vorgenommen wird.

Bei digitalen Übertragungssystemen, insbesondere solchen, die für den mobilen Empfang ausgelegt sind, wird im allgemeinen eine Kanal-Codierung durchgeführt, mit der dem Datenstrom Redundanz zugeführt wird, um eine Fehlerkorrektur im Empfänger zu ermöglichen. Einer solchen Fehlerkorrektur wird häufig ein Soft-Decision-Verfahren eingesetzt, wie es durch einen Viterbi-Decoder realisiert werden kann. Dabei werden Metriken abgeleitet, welche Zahlenangaben für die Wahrscheinlichkeit darstellen, inwieweit das jeweilige Signal dem jeweils zu übertragenden Signal nahekommt.

Zur Verringerung der Anfälligkeit gegen kurzzeitige Störungen (error bursts) des Empfangssignals sind Verwürfelungsverfahren (Time-Interleaving) bekanntgeworden. Dabei ist empfangsseitig eine Entwürfelung notwendig, wozu eine Zwischenspeicherung eines großen Teils des übertragenen Datenstroms erforderlich und dementsprechend ein großer Speicher vorzusehen ist. Bei der erfindungsgemäßen Einrichtung kann der Speicherbedarf erheblich verringert werden, wenn das Phasensignal und gegebenenfalls das Betragssignal einer an sich erforderlichen zeitlichen Entwürfelung unterzogen werden.

Eine weitere Verringerung des Speicherbedarfs ist dadurch möglich, daß Signale in einem Wertebereich, der von dem Phasensignal und gegebenenfalls von dem Betragssignal abgeleitet wurde, einer an sich erforderlichen zeitlichen Entwürfelung unterzogen werden.

Zur weiteren Reduzierung des Gesamtaufwandes der Empfängerstruktur kann bei der erfindungsgemäßen Einrichtung vorgesehen sein, daß das Phasensignal und gegebenenfalls das Betragssignal einer Kanal-Decodierung unterzogen werden, wobei vorzugsweise die Kanal-Decodierung zur Fehlerkorrektur dient.

Diese Vereinfachung der Empfängerstruktur kann ferner dadurch erreicht werden, daß Signale in einem Wertebereich, der von dem Phasensignal und gegebenenfalls dem Betragssignal abgeleitet wurde, einer Kanal-Decodierung unterzogen werden, wobei vorzugsweise die Kanal-Decodierung zur Fehlerkorrektur dient.

Eine vorteilhafte Ausgestaltung der erfindungsgemäßen Einrichtung besteht darin, daß aus dem Phasensignal eine mittlere Phasenabweichung aller Träger bestimmt wird, die zu einer weiteren Korrektur verwendet wird.

Ausführungsbeispiele der Erfindung sind in der Zeichnung anhand mehrerer Figuren dargestellt und in der nachfolgenden Beschreibung näher erläutert. Es zeigt:

Fig. 1    ein Blockschaltbild eines Ausführungsbeispiels,

Fig. 2    eine mögliche Aufteilung der komplexen Ebene zur Polardarstellung der QAM-Signale und

Fig. 3    ein Blockschaltbild eines weiteren Ausführungsbeispiels.

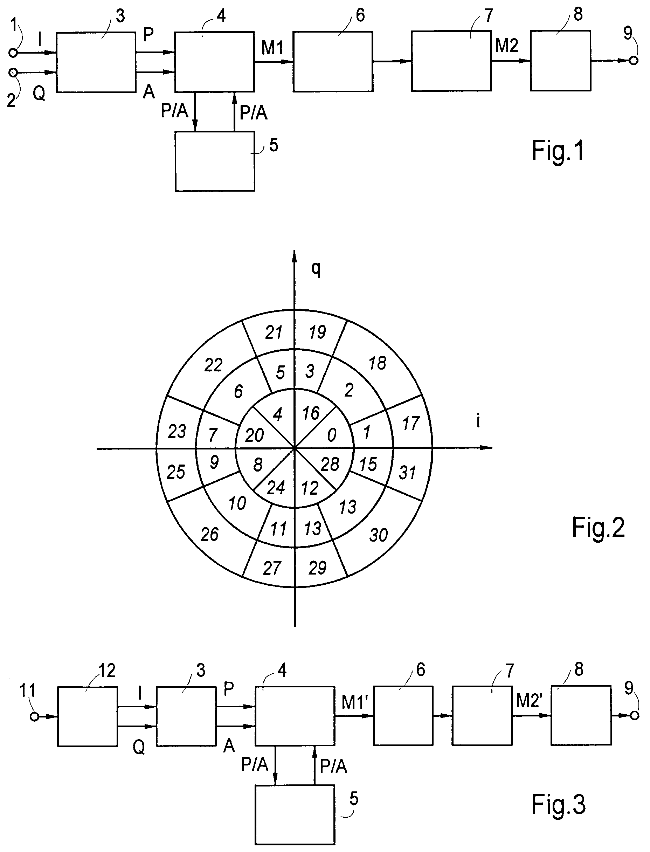

Gleiche Teile sind in den Figuren 1 und 3 mit gleichen Bezugszeichen versehen. Die numerischen Angaben in Fig. 2 wurden zur Unterscheidung von den Bezugszeichen in den Figuren 1 und 3 kursiv gedruckt.

Der in Fig. 1 dargestellten Einrichtung werden bei 1, 2 die bereits im Basisband vorliegenden Quadratur-Signale I und Q zugeführt. Mit Hilfe eines Cordic-Verfahrens werden bei 3 daraus ein Phasensignal P und ein Betragssignal A abgeleitet, die einem Demodulator 4 zugeführt werden. Zur Demodulation der DQAM-Signale greift der Demodulator 4 auf einen Speicher 5 zur Ablage des jeweils vorangegangenen Wertes des Phasensignals P bzw. des Betragssignals A zu. Die entstehenden Differenzwerte δS werden dann jeweils einem Wertebereich M1 zugeordnet, beispielsweise nach dem in Fig. 2 dargestellten Schema. Diese Wertebereiche werden bei 6 einem Zeit-Deinterleaving (Entwürfelung) unterzogen, worauf aus einer Tabelle 7 eine Metrik M2 entnommen wird, welche jeweils die Wahrscheinlichkeit der Zugehörigkeit zu einem der Quadranten darstellt. So ist beispielsweise die Wahrscheinlichkeit, im ersten Quadranten zu liegen, für den Wertebereich 18 (Fig. 2) hoch, während sie für den mit 0 gekennzeichneten Wertebereich gering ist. Von der Tabelle 7 wird dann die Metrik M2 einem Viterbi-Decoder 8 zur Fehlerkorrektur zugeführt. Die demodulierten Signale können dann einem Ausgang 9 entnommen werden.

Das Ausführungsbeispiel gemäß Fig. 3 ist zur Demodulation von OFDM-Signalen, vorzugsweise in I/Q-Darstellung ausgelegt, die dem Eingang 11 zugeführt werden. Diese Signale werden bei 12 einer digitalen Fourier-Transformation (DFT), insbesondere einer schnellen Fourier-Transformation (FFT), unterzogen, deren Ausgangssignale I und Q mehrere Kanäle in Zeitmultiplex-Darstellung enthalten. Nach der bereits im Zusammenhang mit Fig. 1 erläuterten Umwandlung in jeweils Betrags- und Phasensignale A bzw. P bei 3 erfolgt eine Demodulation bei 4, wobei in dem Speicher 5 für jeden der Kanäle ein vorangegangener Wert des Phasensignals P und des Betragssignals A zwischengespeichert wird. Die weitere Verarbeitung des somit entstandenen Wertebereichs M1' erfolgt wie im Zusammenhang mit Fig. 1 beschrieben. Eine vorteilhafte Anwendung dieses Ausführungsbeispiels ist die Demodulation von DAB-Signalen (Digital Audio Broadcasting).

**Patentansprüche**

1.  Einrichtung zur Demodulation von QAM-Signalen, welche digital codierte Informationen darstellen, dadurch gekennzeichnet, daß nach einer Ableitung der Quadraturkomponenten der zu demodulierenden QAM-Signale ein Betragssignal und ein Phasensignal gebildet werden und daß das Betragssignal und das Phasensignal gemeinsam demoduliert werden.

2.  Einrichtung zur Demodulation von DPSK-Signalen, dadurch gekennzeichnet, daß nach einer Ableitung der Quadraturkomponenten der zu demodulierenden DPSK-Signale mindestens ein Phasensignal gebildet wird und daß das jeweils gebildete Phasensignal und ein vorangegangenes Phasensignal subtrahiert werden.

3.  Einrichtung nach einem der Ansprüche 1 oder 2, dadurch gekennzeichnet, daß die Bildung des Betragssignals und des Phasensignals nach dem Cordic-Verfahren vorgenommen wird.

4. Einrichtung nach einem der vorhergehenden Ansprüche, dadurch gekennzeichnet, daß das Phasensignal und gegebenenfalls das Betragssignal einer an sich erforderlichen zeitlichen Entwürfelung unterzogen werden.

5. Einrichtung nach einem der Ansprüche 1 bis 3, dadurch gekennzeichnet, daß Signale in einem Wertebereich, der von dem Phasensignal und gegebenenfalls von dem Betragssignal abgeleitet wurde, einer an sich erforderlichen zeitlichen Entwürfelung unterzogen werden.

6. Einrichtung nach einem der vorhergehenden Ansprüche, dadurch gekennzeichnet, daß das Phasensignal und gegebenenfalls das Betragssignal einer Kanal-Decodierung unterzogen werden.

7. Einrichtung nach Anspruch 6, dadurch gekennzeichnet, daß die Kanal-Decodierung zur Fehlerkorrektur dient.

8. Einrichtung nach einem der Ansprüche 1 bis 5, dadurch gekennzeichnet, daß Signale in einem Wertebereich, der von dem Phasensignal und gegebenenfalls dem Betragssignal abgeleitet wurde, einer Kanal-Decodierung unterzogen werden.

9. Einrichtung nach Anspruch 8, dadurch gekennzeichnet, daß die Kanal-Decodierung zur Fehlerkorrektur dient.

10. Einrichtung nach einem der vorhergehenden Ansprüche, wobei die Bildung der Quadraturkomponenten im Basisband durch ein OFDM-Verfahren erfolgt, dadurch gekennzeichnet, daß aus dem Phasensignal eine mittlere Phasenabweichung aller Träger bestimmt wird, die zu einer weiteren Korrektur verwendet wird.

Fig.1

Fig.2

Fig.3